# EUROPEAN PATENT APPLICATION

(11) **EP 4 608 068 A1**
(43) Date of publication of application: **27.08.2025**
(21) Application number: 25156528.9
(22) Date of filing: 07.02.2025
(51) Int. Cl.: H04W 88/12, H04W 88/08

(54) **REAL TIME CONTROL PLATFORM FOR RADIO ACCESS NETWORK NODE**

(30) Priority: 23.02.2024 FI 20245226
(71) Applicant: Nokia Solutions and Networks Oy, 02610 Espoo (FI)
(72) Inventor: KAK, Ahan, Summit, NJ, 07901 (US); LIU, Chang, 91120 PALAISEAU (FR); ARAVINTHAN, Gopalasingham, 91300 Massy (FR); CHOI, Nakjung, Florham Park, NJ, 07932 (US)
(74) Representative: Nokia EPO representatives

(57) **Abstract**

A radio access network (RAN) node may include a real-time (RT) application platform configured to execute at least one RT user application, the at least one RT user application being a non-native RAN node application, and a RT agent application configured to, monitor events generated by at least one native RAN node function, and transmit a mailbox message to the at least one RT user application in response to the generated event.

## Description

### RELATED FIELD

Various example embodiments relate to methods, apparatuses, systems, and/or non-transitory computer readable media for providing a real-time (RT) control platform for radio access network (RAN) nodes, such as 5G and/or 6G RAN nodes, etc.

### BACKGROUND

The members of the Open Radio Access Network (O-RAN) Alliance are developing a RAN standard which provides non-proprietary RAN sub-components to be developed by a variety of vendors and which may natively interoperate with each other. The O-RAN standard enables programmable, intelligent, disaggregated, virtualized, and interoperable functions. For example, proprietary remote radio head (RRH) and baseband units (BBUs) are disaggregated to radio units (RUs), distributed units (DUs), and centralized units (CUs), which may be virtualized and/or containerized, and the interfaces between such components are open and interoperable under the O-RAN standard.

Additionally, the O-RAN standard introduces the possibility of external, third-party RAN control and assurance through a set of RAN intelligent controllers (RICs). Currently, the O-RAN standard provides RICs operating at non-real-time (non-RT) time scales, e.g., > 1 s, and near-real-time (near-RT) RICs operating in the > 10 ms time scale.

### SUMMARY

At least one example embodiment relates to a radio access network (RAN) node.

In at least one example embodiment, the RAN node may include a real-time (RT) application platform configured to execute at least one RT user application, the at least one RT user application being a non-native RAN node application, and a RT agent application configured to, monitor events generated by at least one native RAN node function, and transmit a mailbox message to the at least one RT user application in response to the generated event.

Some example embodiments provide that the at least one native RAN node function is at least one of: an Open-RAN RAN application programming interface (API) function, an operation, administrative, and management (OAM) API function, a native base station API function, a 3rd Generation Partnership Project (3GPP) protocol API function, or any combinations thereof.

Some example embodiments provide that a control loop execution time period of the at least one RT user application is less than 10 ms.

Some example embodiments provide that the RT application platform is further configured to execute at least one of: at least one interface services application, at least one common services application, at least one system services application, or any combinations thereof.

Some example embodiments provide that the interface services application is configured to: communicate with at least one non-RT application or at least one near-RT application over at least one external communication interface.

Some example embodiments provide that the at least one external communication interface includes at least one of: at least one first non-3GPP interface configured to communicate with the at least one non-RT application, at least one second non-3GPP interface configured to communicate with the at least one near-RT application, or a combination thereof.

Some example embodiments provide that the at least one common services application is configured to: receive a function list mailbox message from the RT agent application indicating a plurality of native RAN node functions supported by the RAN node, the plurality of native RAN node functions including the at least one native RAN node function, receive a system service setup request from the system service application, the system service setup request including at least one requested native RAN node function of the plurality of native RAN node functions, determine whether to grant access to the system service application to the at least one requested native RAN node function based on permissions of the system service application, and transmit a response to the system service setup request based on results of the determination.

Some example embodiments provide that the at least one system service application is configured to manage access of the at least one RT user application to the at least one requested native RAN node function.

Some example embodiments provide that the at least one system service application is configured to manage the access of the at least one RT user application by: receiving an onboarding request from the at least one RT user application, the onboarding request including a requesting access to the at least one native RAN node function, determining whether to grant access to the at least one RT user application to the requested at least one native RAN node function based on permissions of the at least one RT user application and a status of the at least one native RAN node function, and transmitting the onboarding request to the RT agent application based on results of the determination.

Some example embodiments provide that the RT agent application is further configured to: receive the onboarding request from the at least one system service application, determine a status of the at least one native RAN node function, add the at least one RT user application to an activation list associated with the at least one native RAN node function based on the determined status of the at least one native RAN node function, and transmit a response to the onboarding request to the at least one system service application based on the addition of the at least one RT user application to the activation list associated with the at least one native RAN node function, the response including a rules list associated with the at least one native RAN node function and the at least one RT user application.

Some example embodiments provide that the at least one system service application is configured to manage the access of the at least one RT user application by: receiving a replacement onboarding request from a second RT user application different from the at least one RT user application, the replacement onboarding request indicating that the second RT user application is to replace the at least one RT user application, determining whether to grant access to the second RT user application to the requested at least one native RAN node function based on permissions of the second RT user application and a status of the at least one native RAN node function, and transmitting the replacement onboarding request to the RT agent application based on results of the determination.

Some example embodiments provide that the RT application platform includes a lifecycle management application, the RT agent application is further configured to, receive the replacement onboarding request from the at least one system service application, determine a status of the at least one native RAN node function, add the second RT user application to an activation list associated with the at least one native RAN node function based on the determined status of the at least one native RAN node function, remove the at least one RT user application from the activation list associated with the at least one native RAN node function, and transmit a response to the replacement onboarding request to the at least one system service application based on the addition of the second RT user application to the activation list associated with the at least one native RAN node function, the response including a rules list associated with the at least one native RAN node function and the second RT user application, and the lifecycle management application is configured to remove the at least one RT user application based on the response to the replacement onboarding request.

Some example embodiments provide that the at least one RT user application is a plurality of RT user applications, and the RT agent application is further configured to monitor the events generated by the at least one native RAN node function by, identifying RT user applications included in an activation list associated with the at least one native RAN node function, the identified RT user applications being included in the plurality of RT user applications, and transmitting the mailbox message to the identified RT user applications in response to the generated event.

Some example embodiments provide that the RT application platform is further configured to execute at least one system service application, and the at least one system service application is configured to, receive control messages from the identified RT user applications in response to the transmitted mailbox message, perform resource conflict mitigation in response to the received control messages, the resource conflict mitigation including determining resource availability associated with the at least one native RAN node function, and transmit updated control messages to the RT agent application in response to the resource conflict mitigation.

Some example embodiments provide that the plurality of RT user applications includes a first RT user application, the first RT user application including a first handler function, and the first RT user application is configured to, receive a second handler function from at least one user, the second handler function replacing the first handler function, and transmit a control message to the at least one system service application using the second handler function in response to a received mailbox message.

Some example embodiments provide that the RT application platform is further configured to execute a first system service application, the first system service application including a plurality of supported functions and a plurality of supported rules, each of the plurality of supported functions corresponding to at least one RT user application of the plurality of RT user applications, and the first system service application is configured to, receive a replacement message from at least one user, the replacement message indicating at least one function from the plurality of functions to be replaced, transmit a close connection message to the corresponding at least one RT user application of the at least one function to be replaced, and transmit a remove message to the RT agent application, the remove message causing the RT agent application to remove the corresponding at least one RT user application of the at least one function to be replaced from the activation list.

Some example embodiments provide that the RT application platform and the RT agent application support a plurality of mailbox transmission protocols.

Some example embodiments provide that the plurality of mailbox transmission protocols includes at least two of: ZeroMQ (ZMQ), nng, E2 Application Protocol (E2AP), O1, NG Application Protocol (NGAP), X2 Application Protocol (X2AP), S1 Application Protocol (S1AP), Xn Application Protocol (XnAP), E1 Application Protocol (E1AP), F1 Application Protocol (F1AP), Kafka, or any combinations thereof.

Some example embodiments provide that each of the at least one RT user application includes a plurality of mailbox plugins associated with the plurality of mailbox transmission protocols.

At least one example embodiment relates to a method of operating a radio access network (RAN) node.

In at least one example embodiment, the method may include monitoring, using a real-time (RT) agent application, events generated by at least one native RAN node function, and transmitting, using the RT agent application, a mailbox message to at least one RT user application in response to the generated event, the at least one RT user application executed on a RT application platform, the at least one RT user application being a non-native RAN node application.

Some example embodiments provide that the at least one native RAN node function is at least one of: an Open-RAN RAN application programming interface (API) function, an operation, administrative, and management (OAM) API function, a native base station API function, a 3rd Generation Partnership Project (3GPP) protocol API function, or any combinations thereof.

Some example embodiments provide that a control loop execution time period of the at least one RT user application is less than 10 ms.

Some example embodiments provide that the method may further include receiving, using a common services application executing on the RT application platform, a function list mailbox message from the RT agent application indicating a plurality of native RAN node functions supported by the RAN node, the plurality of native RAN node functions including the at least one native RAN node function, receiving, using the common services application, a system service setup request from a system service application executing on the RT application platform, the system service setup request including at least one requested native RAN node function of the plurality of native RAN node functions, determining, using the common services application, whether to grant access to the system service application to the at least one requested native RAN node function based on permissions of the system service application, and transmitting, using the common services application, a response to the system service setup request based on results of the determination.

At least one example embodiment relates to a radio access network (RAN) node.

In at least one example embodiment, the RAN node may include memory storing computer readable instructions, and processing circuitry configured to execute the computer readable instructions to cause the RAN node to, monitor events generated by at least one native RAN node function, and transmit a mailbox message to at least one real-time (RT) user application in response to the generated event, the at least one RT user application executed on a RT application platform, the at least one RT user application being a non-native RAN node application.

At least one example embodiment relates to a radio access network (RAN) node.

In at least one example embodiment, the RAN node may include means for causing a real-time (RT) application platform configured to execute at least one RT user application, the at least one RT user application being a non-native RAN node application, and causing a RT agent application configured to, monitor events generated by at least one native RAN node function, and transmit a mailbox message to the at least one RT user application in response to the generated event.

Some example embodiments provide that the at least one native RAN node function is at least one of: an Open-RAN RAN application programming interface (API) function, an operation, administrative, and management (OAM) API function, a native base station API function, a 3rd Generation Partnership Project (3GPP) protocol API function, or any combinations thereof.

Some example embodiments provide that a control loop execution time period of the at least one RT user application is less than 10 ms.

Some example embodiments provide that the RAN node further includes means for causing the RT application platform to execute at least one of: at least one interface services application, at least one common services application, at least one system services application, or any combinations thereof.

Some example embodiments provide that the RAN node further includes means for causing the interface services application to communicate with at least one non-RT application or at least one near-RT application over at least one external communication interface.

Some example embodiments provide that the at least one external communication interface includes at least one of: at least one first non-3GPP interface configured to communicate with the at least one non-RT application, at least one second non-3GPP interface configured to communicate with the at least one near-RT application, or a combination thereof.

Some example embodiments provide that the RAN node further includes means for causing the at least one common services application to: receive a function list mailbox message from the RT agent application indicating a plurality of native RAN node functions supported by the RAN node, the plurality of native RAN node functions including the at least one native RAN node function, receive a system service setup request from the system service application, the system service setup request including at least one requested native RAN node function of the plurality of native RAN node functions, determine whether to grant access to the system service application to the at least one requested native RAN node function based on permissions of the system service application, and transmit a response to the system service setup request based on results of the determination.

Some example embodiments provide that the RAN node further includes means for causing the at least one system service application to manage access of the at least one RT user application to the at least one requested native RAN node function.

Some example embodiments provide that the RAN node further includes means for causing the at least one system service application to manage the access of the at least one RT user application by: receiving an onboarding request from the at least one RT user application, the onboarding request including a requesting access to the at least one native RAN node function, determining whether to grant access to the at least one RT user application to the requested at least one native RAN node function based on permissions of the at least one RT user application and a status of the at least one native RAN node function, and transmitting the onboarding request to the RT agent application based on results of the determination.

Some example embodiments provide that the RAN node further includes means for causing the RT agent application to: receive the onboarding request from the at least one system service application, determine a status of the at least one native RAN node function, add the at least one RT user application to an activation list associated with the at least one native RAN node function based on the determined status of the at least one native RAN node function, and transmit a response to the onboarding request to the at least one system service application based on the addition of the at least one RT user application to the activation list associated with the at least one native RAN node function, the response including a rules list associated with the at least one native RAN node function and the at least one RT user application.

Some example embodiments provide that the RAN node further includes means for causing the at least one system service application to manage the access of the at least one RT user application by: receiving a replacement onboarding request from a second RT user application different from the at least one RT user application, the replacement onboarding request indicating that the second RT user application is to replace the at least one RT user application, determining whether to grant access to the second RT user application to the requested at least one native RAN node function based on permissions of the second RT user application and a status of the at least one native RAN node function, and transmitting the replacement onboarding request to the RT agent application based on results of the determination.

Some example embodiments provide that the RT application platform includes a lifecycle management application, that the RAN node further includes means for causing the RT agent application to, receive the replacement onboarding request from the at least one system service application, determine a status of the at least one native RAN node function, add the second RT user application to an activation list associated with the at least one native RAN node function based on the determined status of the at least one native RAN node function, remove the at least one RT user application from the activation list associated with the at least one native RAN node function, and transmit a response to the replacement onboarding request to the at least one system service application based on the addition of the second RT user application to the activation list associated with the at least one native RAN node function, the response including a rules list associated with the at least one native RAN node function and the second RT user application, and the RAN node further includes means for causing the lifecycle management application to remove the at least one RT user application based on the response to the replacement onboarding request.

Some example embodiments provide that the at least one RT user application is a plurality of RT user applications, and the RAN node further includes means for causing the RT agent application to monitor the events generated by the at least one native RAN node function by, identifying RT user applications included in an activation list associated with the at least one native RAN node function, the identified RT user applications being included in the plurality of RT user applications, and transmitting the mailbox message to the identified RT user applications in response to the generated event.

Some example embodiments provide that the RAN node further includes means for causing the RT application platform to execute at least one system service application, and the RAN node further includes means for causing the at least one system service application to, receive control messages from the identified RT user applications in response to the transmitted mailbox message, perform resource conflict mitigation in response to the received control messages, the resource conflict mitigation including determining resource availability associated with the at least one native RAN node function, and transmit updated control messages to the RT agent application in response to the resource conflict mitigation.

Some example embodiments provide that the plurality of RT user applications includes a first RT user application, the first RT user application including a first handler function, and the RAN node further includes means for causing the first RT user application to, receive a second handler function from at least one user, the second handler function replacing the first handler function, and transmit a control message to the at least one system service application using the second handler function in response to a received mailbox message.

Some example embodiments provide that the RAN node further includes means for causing the RT application platform to execute a first system service application, the first system service application including a plurality of supported functions and a plurality of supported rules, each of the plurality of supported functions corresponding to at least one RT user application of the plurality of RT user applications, and the RAN node further includes means for causing the first system service application to, receive a replacement message from at least one user, the replacement message indicating at least one function from the plurality of functions to be replaced, transmit a close connection message to the corresponding at least one RT user application of the at least one function to be replaced, and transmit a remove message to the RT agent application, the remove message causing the RT agent application to remove the corresponding at least one RT user application of the at least one function to be replaced from the activation list.

Some example embodiments provide that the RT application platform and the RT agent application support a plurality of mailbox transmission protocols.

Some example embodiments provide that the plurality of mailbox transmission protocols includes at least two of: ZeroMQ (ZMQ), nng, E2 Application Protocol (E2AP), O1, NG Application Protocol (NGAP), X2 Application Protocol (X2AP), S1 Application Protocol (S1AP), Xn Application Protocol (XnAP), E1 Application Protocol (E1AP), F1 Application Protocol (F1AP), Kafka, or any combinations thereof.

Some example embodiments provide that each of the at least one RT user application includes a plurality of mailbox plugins associated with the plurality of mailbox transmission protocols.

At least one example embodiment relates to a radio access network (RAN) node.

In at least one example embodiment, the RAN node may include means for, monitoring events generated by at least one native RAN node function, and transmitting a mailbox message to at least one real-time (RT) user application in response to the generated event, the at least one RT user application executed on a RT application platform, the at least one RT user application being a non-native RAN node application.

### BRIEF DESCRIPTION OF THE DRAWINGS

The accompanying drawings, which are incorporated in and constitute a part of the specification, illustrate one or more example embodiments and, together with the description, explain these example embodiments. In the drawings:
FIG. 1 illustrates a block diagram of an example radio access network (RAN) node according to at least one example embodiment;
FIG. 2 illustrates an example functional diagram of the example RAN node of FIG. 1;
FIG. 3 is an example functional diagram of a mailbox messaging architecture according to at least one example embodiment;
FIG. 4 is an example transmission diagram illustrating a method of performing mailbox messaging according to some example embodiments;
FIG. 5 is an example transmission diagram illustrating a method of setting up a real-time (RT) RAN intelligent controller (RIC) according to some example embodiments;
FIG. 6 is an example transmission diagram illustrating a method of onboarding at least one RT user application according to some example embodiments;
FIG. 7 is an example transmission diagram illustrating a method of performing monitor and control procedures according to some example embodiments;
FIG. 8 is an example transmission diagram illustrating a first method of dynamically updating at least one RT user application according to some example embodiments;
FIG. 9 is an example transmission diagram illustrating a second method of dynamically updating at least one RT user application according to some example embodiments;
FIG. 10 is an example transmission diagram illustrating a method of dynamically updating at least one system service application according to some example embodiments; and
FIG. 11 is an example transmission diagram illustrating a method of performing resource allocation according to some example embodiments.

### DETAILED DESCRIPTION

Various example embodiments will now be described more fully with reference to the accompanying drawings in which some example embodiments are illustrated. However, specific structural and functional details disclosed herein are merely representative for purposes of describing the example embodiments. The example embodiments may, however, be embodied in many alternate forms and should not be construed as limited to only the example embodiments configured forth herein.

Various example embodiments are directed towards methods, apparatuses, systems, and/or non-transitory computer readable media for providing a real-time (RT) RIC for radio access network (RAN) nodes including, but not limited to, RAN nodes compatible with the O-RAN standard and/or other RAN protocols.

While the O-RAN standard currently provides non-RT RICs operating at > 1s time ranges and near-RT RICs operating at > 10 ms time ranges, these time scales are not suitable for control and/or scheduling of certain events occurring at RAN nodes, such as user scheduling, resource allocation, beam management, and/or power control, etc. Currently, the 3rd Generation Partnership Project (3GPP) 5G wireless communication standard defines a base station's transmission time interval (TTI) to have an upper bound of 1 ms, which is lower than the operating time ranges of both the non-RT RICs and the near-RT RICs, and the 3GPP 6G wireless communication standard is expected to define a base station's TTI to have an upper bound of less than 1 ms. Further, Ultra-Reliable Low-Latency Communication (URLLC) service, which was first introduced as part of the 5G standard, is expected to require extremely high reliability with TTI of 100 microseconds or less.

Accordingly, there is a desire for a RT RIC for RAN nodes which operates with a timescale of less than 10 ms, and particularly with in the timescale of 5G/6G RAN TTI to host applications and/or deliver services enabling control, telemetry, and/or external interface-related operations. According to at least one example embodiment, the term "timescale" refers to the round-trip time (RTT) between the RT RIC and the RAN node plus a desired time period for a decision and/or operation to be performed at the RT RIC by a RT RIC application Additionally, there is a desire for a RT RIC which provides low-latency, low-overhead operations, and fully dynamic lifecycle management for all deployed services, including, for example, the ability to upgrade base station features with zero downtime for the base station.

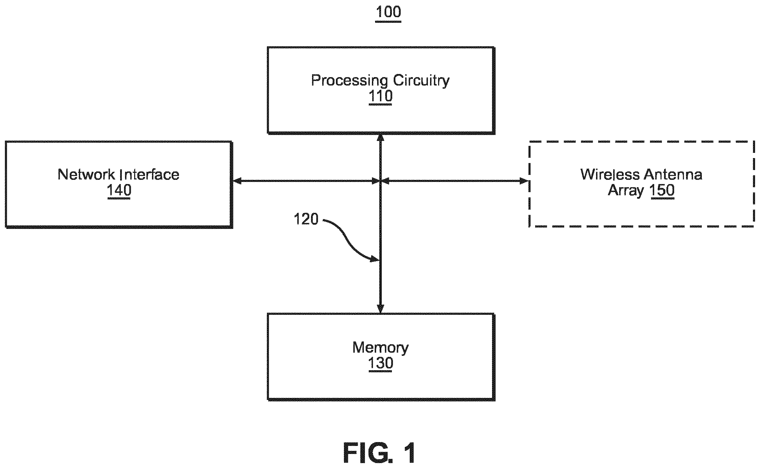

FIG. 1 illustrates a block diagram of an example RAN node according to at least one example embodiment. The RAN node of FIG. 1 may be a base station, a transmission reception point (TRP), an access point, etc., but the example embodiments are not limited thereto.

Referring to FIG. 1, a RAN node 100 may include processing circuitry, such as processing circuitry 110, at least one communication bus 120, a memory 130, at least one network interface 140, and/or at least one wireless antenna array 150, but the example embodiments are not limited thereto. For example, the network interface 140 and the wireless antenna array 150 may be combined into a single network interface, or the RAN node 100 may include a plurality of wireless antenna arrays, a plurality of network interfaces, and/or any combinations thereof. The memory 130 may include various special purpose program code including computer executable instructions which may cause the RAN node 100 to perform the one or more of the methods of the example embodiments.

In at least one example embodiment, the processing circuitry 110 may include at least one processor (and/or processor cores, distributed processors, and networked processors), which may be configured to control one or more elements of the RAN node 100, and thereby cause the RAN node 100 to perform various operations. The processing circuitry 110 is configured to execute processes by retrieving program code (e.g., computer readable instructions) and data from the memory 130 to process them, thereby executing special purpose control and functions of the entire RAN node 100. Once the special purpose program instructions are loaded into the processing circuitry 110, the processing circuitry 110 executes the special purpose program instructions, thereby transforming the processing circuitry 110 into a special purpose processor.

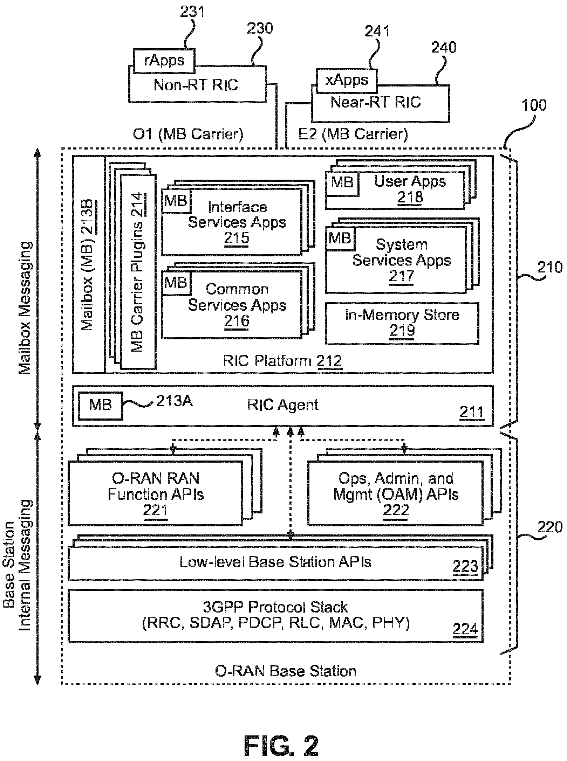

In at least one example embodiment, the memory 130 may be a non-transitory computer-readable storage medium and may include a random access memory (RAM), a read only memory (ROM), and/or a non-volatile mass storage device, such as a disk drive, and/or a solid state drive. Stored in the memory 130 is program code (e.g., computer readable instructions) related to operating the RAN node 100, such as the functions and/or methods discussed in connection with FIGS. 2 to 11 (e.g., functions and/or methods associated with a RT RIC application platform, a RT RIC agent application, RT mailbox messaging protocols, etc.), the at least one network interface 140, and/or at least one wireless antenna array 150. Such software elements may be loaded from a non-transitory computer-readable storage medium independent of the memory 130, using a drive mechanism (not illustrated) connected to the RAN node 100, via the at least one network interface 140, and/or via the at least one wireless antenna array 150.

In at least one example embodiment, the communication bus 120 may enable communication and data transmission to be performed between elements of the RAN node 100. The bus 120 may be implemented using a high-speed serial bus, a parallel bus, and/or any other appropriate communication technology. According to at least one example embodiment, the RAN node 100 may include a plurality of communication buses (not illustrated), such as an address bus, a data bus, and so on.

According to some example embodiments, the RAN node 100 may include a greater or lesser number of constituent components, and for example, the RAN node 100 may also include at least one energy harvesting device (not illustrated), such as radio frequency (RF) harvesting circuitry (e.g., back-scattering circuitry), one or more solar cells/panels, etc., and/or at least one energy storage device (not illustrated), such as at least one battery, at least one capacitor, and so on.

The at least one wireless antenna array 150 may include an associated array of radio units (not illustrated) and may be used to transmit the wireless signals in accordance with a radio access technology, such as 4G LTE wireless signals, 5G NR wireless signals, future 6G wireless signals, to one or more user equipment (UE) devices and/or radio access network (RAN) nodes, etc. According to some example embodiments, the wireless antenna array 150 may be a single antenna, or may be a plurality of antennas. For example, the wireless antenna array 150 may be configured as a grid of beams (GoB) which transmits a plurality of beams in different directions, angles, frequencies, and/or with different delays.

The RAN node 100 may communicate with a core network (e.g., backend network, backhaul network, backbone network, data network, or another network) of the wireless communication network and/or a data network via the network interface 140. For example, the core network may include user applications executing on a non-RT RIC, and/or user applications executing on a near-RT RIC, but the example embodiments are not limited thereto. The network interface 140 may be a wired and/or wireless network interface and may enable the RAN node 100 to communicate and/or transmit data to and from to network devices on the backend network, such as a core network gateway (not illustrated), a data network (not illustrated), such as the Internet, intranets, wide area networks, telephone networks, or VoIP networks.

While FIG. 1 depicts an example embodiment of a RAN node 100, the example embodiments are not limited thereto, and may include additional and/or alternative architectures that may be suitable for the purposes demonstrated.

FIG. 2 illustrates an example functional diagram of the example RAN node of FIG. 1.

According to at least one example embodiment, a RAN node 100 may execute a RT RIC 210, e.g., a RT control framework and/or a RT execution environment capable of providing a control loop execution time period of 1ms or less, for wireless communication networks, such as 5G wireless networks, 6G wireless networks, etc., but the example embodiments are not limited thereto. The RAN node 100 may also include core components 220 of the RAN node, such as native RAN node functions and/or application programming interfaces (APIs), but the example embodiments are not limited thereto. Computer readable instructions associated with the RT RIC 210 and the core components 220 may be stored in, for example, the memory 130 of FIG. 1, and the computer readable instructions associated with the RT RIC 210 and/or the core components 220 may be executed by, for example, the processing circuitry 110 of FIG. 1, but the example embodiments are not limited thereto.

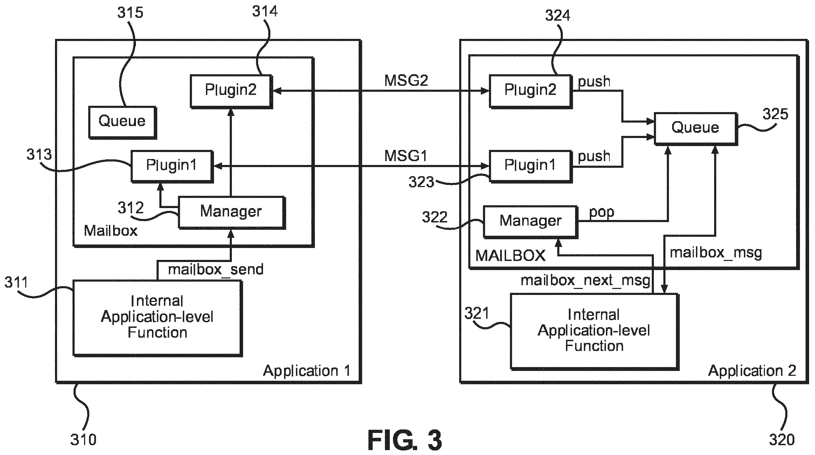

The RT RIC 210 may include a RT agent application 211, e.g., a RIC agent, a RT agent, etc., and/or a RT application platform 212, e.g., a RIC platform, etc. The RT agent application 211 may serve as a communication interface between the RT application platform 212 and the core components 220 of the RAN node 100, through which applications executing on the RT application platform 212 may communicate with the core components 220, use resources of the core components 220, etc. The core components 220 may include native base station APIs to the applications executing on the RT application platform 212, such as O-RAN defined RAN function APIs 221, Operations, Administration, and Management (OAM) APIs 222, low-level base station APIs 223, and/or 3GPP protocol stack (e.g., Radio Resource Control (RRC), Service Data Adaptation Protocol (SDAP), Packet Data Convergence Protocol (PDCP), Radio Link Control (RLC), Medium Access Control (MAC), Physical Layer (PHY), etc.) functions 224, but the example embodiments are not limited thereto. Further, the RT agent application 211 may store messages from the applications to be later read by the core components 220 or vice versa. For example, the RT agent application 211 may enable transmission of scheduling related information, configuration information, and/or telemetry information, etc., between the core components 220 and the applications executed on the RT application platform 212. According to at least one example embodiment, the RIC agent 211 may transmit and/or receive messages using the mailbox 213A and the RIC platform 212 may transmit and/or receive messages using the mailbox 213B, but the example embodiments are not limited thereto. According to some example embodiments, the RIC agent 211 and the RIC platform 212 may transmit messages to each other in a timescale of less than 10 ms. The messaging protocol will be discussed in greater detail in connection with FIG. 3.

The RT application platform 212 may serve as a host (e.g., execution platform, etc.) for lightweight applications and/or services which enable RT control loop functions, such as at least one interface service application 215, at least one common service application 216, at least one user application 218, and/or at least one system service application 217, etc., but the example embodiments are not limited thereto. The applications hosted by the RT application platform 212 may be written in compliance with a desired non-proprietary standard and/or may be compatible with a desired non-proprietary standard, such as the O-RAN standard, but the example embodiments are not limited thereto, and for example, the RT application platform 212 may be implemented for proprietary RAN nodes as well. The applications may be dynamically deployed and/or updated during runtime (e.g., without shutting down or otherwise suspending the wireless communication operations of the RAN node 100), allowing for in-place feature upgrades with zero RAN node downtime.

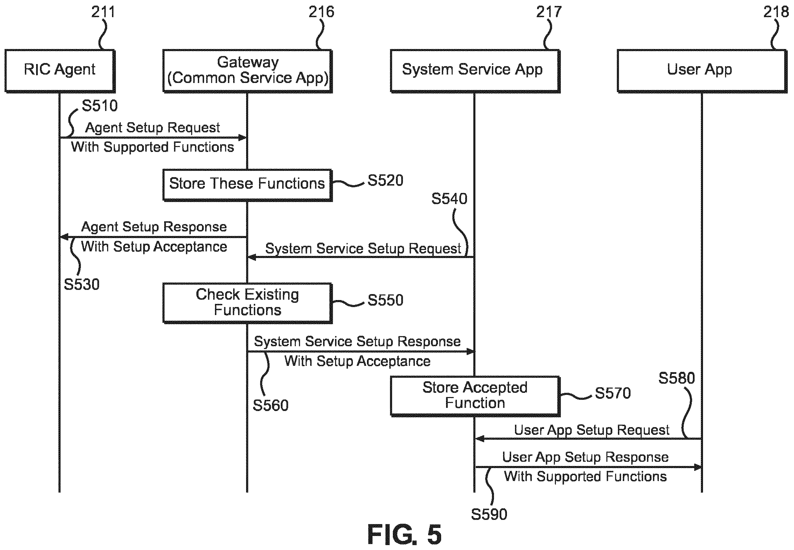

The applications supported by the RT application platform 212 may include interface service applications 215 which provide non-3GPP communication interfaces (e.g., external communication interfaces) for the RAN node 100. For example, the interface services application 215 may provide at least one non-3GPP interface, such as an O1 interface for communication with at least one non-RT RIC 230 and/or applications 231 executed on the non-RT RIC 230, and/or an E2 interface for communication with at least one near-RT RIC 240 and/or applications 241 executed on the near-RT RIC 240, but the example embodiments are not limited thereto, and the interface services application 215 may provide other non-3GPP communication interfaces for the RAN node 100. The RT application platform 212 may allow for the upgrading of the external interface from one communication interface, e.g., E2AP v2 to E2AP v3, etc., by onboarding a new E2 interface service application, and un-deploying (e.g., removing, offboarding, etc.) the older interface service application, as discussed in greater detail in connection with FIG. 5.

The common services applications 216 provide shared services to other RT RIC 210 applications, such as lifecycle management (e.g., onboarding and offboarding applications), resource management between different system service applications 217, and/or read-write capabilities to the RT RIC 210's in-memory store 219. Additionally, the common services applications 216 may provide gateway functionality for messages between the RT RIC 210 applications and the RT agent 211, thereby enforcing access control primitives to ensure that unratified and/or unregistered system services applications 217 do not attempt to communicate with the RT agent 211.

The system services applications 217 provide abstractions for the RT RAN node core components 220, such as a RT scheduling application, an energy management application, a massive MIMO application, etc. The core RAN node services exposed by the system services applications 217 are consumed by user applications for various purposes. For example, a user scheduling user application may obtain relevant scheduling metrics from a RT scheduling system services application 217 and may also control the operation of the RAN node 100's MAC scheduler, while the scheduling logic responsible for allocating resources to users (e.g., UE devices, etc.) may be implemented by the user scheduling user application. Additionally, because a particular system service application 217 may interface with multiple user applications 218, the system service application 217 may also perform conflict mitigation services between the multiple user applications 218. Further, because the RT application platform 212 supports seamless lifecycle management for all applications, new RT control and/or telemetry system services applications 217 may be deployed while the RAN node 100 is in operation.

The user applications 218 may be software applications programmed to implement business logic relating to control and/or telemetry actions associated with the RAN node 100. For security purposes, the user applications 218 do not have direct access to critical internal functions of the RAN node 100, such as the core components 220, etc., and instead the user applications 218 interact exclusively with the system services applications 217. The user applications 217, as well as the other applications of the RT platform 212, are deployed on the same node or cluster as the RAN node 100, to satisfy the RT time scales and/or TTI requirements, etc. Examples of user applications 218 include RAN control algorithms, user scheduling algorithms, artificial intelligence and/or machine learning models, etc.

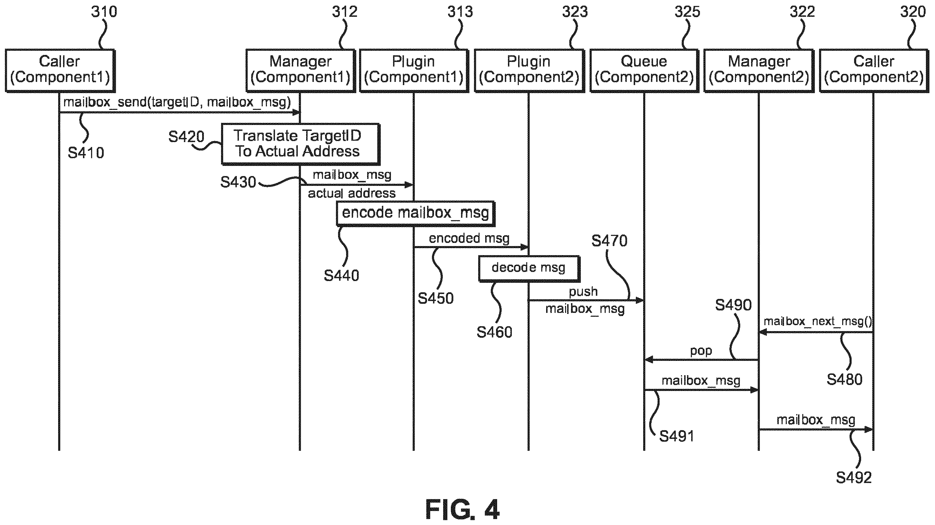

FIG. 3 is an example functional diagram of a mailbox messaging architecture according to at least one example embodiment. FIG. 4 is an example transmission diagram illustrating a method of performing mailbox messaging according to some example embodiments.

As shown in FIGS. 3 and 4, according to some example embodiments, messages may be transmitted between different applications of the RT platform 212 and/or the RT agent 211 using a desired mailbox message format. As shown in FIG. 3, each of the applications of the RT platform 212 and/or the RT agent 211 may include an internal application-level function 311 or 321 (e.g., business logic, algorithm, etc.), a mailbox manager 312 or 322, a first mailbox plugin 313 or 323, an optional second mailbox plugin 314 or 324, and/or a mailbox queue 315 or 325, etc., but the example embodiments are not limited thereto. The mailbox messaging framework incorporates an extensible multi-carrier approach to messaging, wherein each carrier corresponds to a specific messaging library, messaging format, and/or messaging communication protocol, such as 3GPP-defined protocols, non-3GPP, O-RAN-defined protocols, and/or non-3GPP, non-O-RAN defined protocols. Examples of 3GPP defined protocols may include NG Application Protocol (NGAP), X2 Application Protocol (X2AP), S1 Application Protocol (S1AP), Xn Application Protocol (XnAP), E1 Application Protocol (E1AP), F1 Application Protocol (F1AP), etc. Examples of non-3GPP, O-RAN-defined protocols may include E2 Application Protocol (E2AP), O1, etc. Examples of non-3GPP, non-O-RAN defined protocols may include ZeroMQ (ZMQ), nng, Kafka, etc. The different carriers supported by the mailbox messaging framework are implemented using different mailbox plugins for each carrier, e.g., mailbox plugins 313 and 323 may correspond to the ZMQ carrier, and the mailbox plugins 314 and 324 may correspond to the nng carrier, etc., and when a new mailbox carrier is desired, a new mailbox plugin corresponding to the new mailbox carrier may be written and uploaded to the RT platform 212 for use by the applications of the RT platform 212 and/or the RT agent 211.

The mailbox manager 312 and 322 may be responsible for managing the lifecycle of the mailbox plugins and/or for converting target identifiers (ID) to addresses (e.g., file descriptors, ZMQ addresses, etc.) the plugins may use to determine the proper destination for transmitting the mailbox message. The mailbox queue 315 and 325 may store all messages received by the mailbox plugins, and other functions within the same application may fetch messages from its queue using the appropriate mailbox manager.

As shown in FIG. 4, in operation S410, a first application 310 may transmit and/or send a mailbox message to its mailbox manager 312. The mailbox message may include a target ID and the body and/or content of the mailbox message, but is not limited thereto. In operation S420, the mailbox manager 312 may translate the target ID into an actual address for the destination of the message. In operation S430, the mailbox manager 312 may forward the contents of the mailbox message and the actual address to the first mailbox plugin 313. According to at least one example embodiment, the mailbox manager 312 may select the first mailbox plugin 313 from the plurality of mailbox plugins based on mailbox setting information associated with the first application 310. More specifically, when the first application 310 is onboarded, the mailbox manager 312 may identify, obtain, and/or determine the mailbox setting information associated with the first application 310 indicating which mailbox carrier and which mailbox plugin to use with the first application 310, etc. In operation S440, the first mailbox plugin 313 may encode the contents of the mailbox message in the desired format of the carrier corresponding to the first mailbox plugin 313, and in operation S450, the first mailbox plugin 313 may transmit the encoded message to a corresponding first mailbox plugin 323 included in the second application 320 based on the determined actual address. In operation S460, the mailbox plugin 323 decodes the received message, and in operation S470, pushes the decoded message onto the queue 325 of the second application 320. In operation S480, when the second application 320 desires the contents of the received message, the second application 320 (e.g., the internal application-level function 321) transmits a command to its mailbox manager 322 to retrieve the next message stored in the queue 325. In operation S490, the mailbox manager 322 transmits a pop command to the queue 325, and in operation S491, the mailbox manager 322 receives the message from the queue 325. In operation S492, the mailbox manager 322 forwards the popped message to the second application 320 (and/or the internal application-level function 321).

FIG. 5 is an example transmission diagram illustrating a method of setting up a real-time (RT) RAN intelligent controller (RIC) according to some example embodiments.

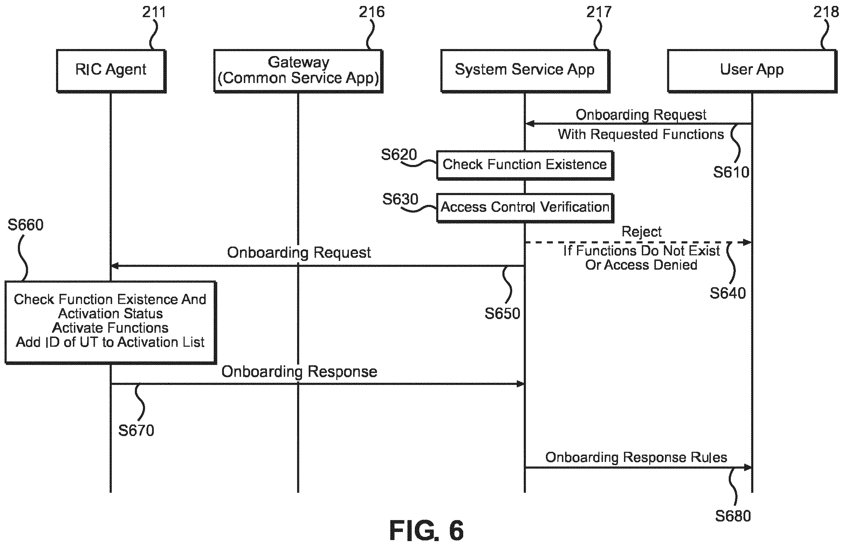

According to some example embodiments, a system setup procedure for the RT RIC may include operation S510, wherein the RIC agent 211 transmits an agent setup request to a common services application 216 (e.g., a gateway application, etc.). The agent setup request may include a list of all supported RAN node functions (e.g., may expose all of the supported RAN node functions, etc.) and the list may further include a set of parameters the RAN node 100 may provide for telemetry for the associated function, and a set of parameters the RAN node 100 may receive to control the RAN node 100 for the associated function, etc., but the example embodiments are not limited thereto. In operation S520, the gateway common services application 216 may store the list of RAN node functions to memory, e.g., the in-memory store 219, etc. In operation S530, the gateway common services application 216 may transmit a response to the RIC agent 211 to acknowledge receipt of and/or accept the list of RAN node functions. In operation S540, at least one system service application 217 may transmit a system service setup request message to the gateway application 216, the setup request message including information indicating the RAN node functions requested and/or desired by the system service application 217. In operation S550, the gateway application 216 determines whether the RAN node functions requested by the system service application 217 are included in the list of RAN node functions (e.g., the RAN node functions requested by the system service application 217 are supported by the RAN node 100). In operation S560, the gateway application 216 returns a response to the system service setup request to the system service application 217 indicating whether the setup was successful or not. In operation S570, if the setup was successful, e.g., one or more of the requested RAN node functions are supported and/or available to the system service application 217, the system service application 217 stores the accepted (e.g., supported, available, etc.) RAN node functions into memory. In operation S580, at least one user application 218 may transmit a user application setup request to the system service application 217, the setup request indicating a list of RAN node functions requested by the user application 218. In operation S590, the system service application 217 may transmit a response to the user application setup request with a list of its supported functions, etc. The user application setup procedure will be discussed in greater detail in connection with FIG. 6.

FIG. 6 is an example transmission diagram illustrating a method of onboarding at least one RT user application according to some example embodiments.

According to at least one example embodiment, in operation S610, as discussed in operation S580 of FIG. 5, the user application 218 may transmit a setup request (e.g., an onboarding request, etc.) to the system service application 217, the setup request including a list of RAN node functions requested by the user application 218. In operation S620, the system service application 217 may check to see whether the requested RAN node functions exist (e.g., is available to the system service application 217). In operation S630, the system service application 217 may determine whether the user application 218 has permission to access the requested RAN node functions (e.g., perform access control verification on the user application 218). For example, the system service application 217 may perform a lookup on a unique user application identifier associated with the user application 218 against an access control level database or the like to determine the level of access control for the user application 218. According to at least one example embodiment, the system service application 217 may obtain and/or determine the unique user application identifier associated with the user application 218 during the onboarding process of the user application 218, but the example embodiments are not limited thereto. In operation S640, the system service application 217 may transmit an onboarding rejection message if the requested RAN node function does not exist and/or the user application 218 does not have permission to access the requested RAN node function and the method ends. In operation S650, assuming the onboarding request has not been rejected, the system service application 217 may forward the onboarding request to the RIC agent 211. In operation S660, the RIC agent 211 may check whether the requested RAN node functions exist and determine an activation status of the requested RAN node functions. Additionally, the RIC agent 211 may activate the RAN node functions, if the RAN node function is not already active, and/or add an identifier corresponding to the user application 218 to an activation list of the requested RAN node function(s). In operation S670, the RIC agent 211 may transmit the onboarding response to the system service application 217, and the system service application 217 may forward the onboarding response to the user application 218. The onboarding response may include a rules list concerning the parameters that the user application 218 is allowed to access for the permissible RAN node functions.

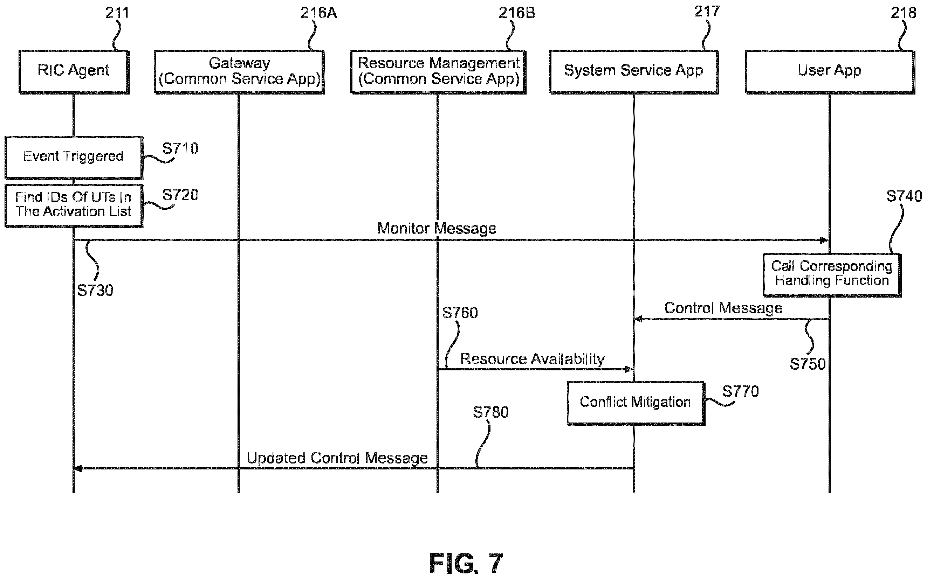

FIG. 7 is an example transmission diagram illustrating a method of performing monitor and control procedures according to some example embodiments.

According to some example embodiments, after the user application 218 has been onboarded, e.g., as shown in FIG. 6, but not limited thereto, the user application may be ready to receive monitor messages from the RIC agent 211 and/or transmit control messages to the RIC agent 211 to control the RAN node 100, etc. In operation S710, after a RAN node function has been activated (e.g., in operation S660 of FIG. 6), the RIC agent 211 may monitor the RAN node function to determine whether an event has been triggered and/or generated. In operation S720, in response to the event being triggered and/or generated by the RAN node function, the RIC agent 211 may identify the identifiers of user applications included in the activation list associated with the RAN node function. In operation S730, the RIC agent 211 may transmit a monitor message to the mailboxes of the identified user applications 218. The monitor message may include information related to the RAN node 100 and/or the relevant RAN node function, etc. In operation S740, the user application 218 may, for example, call a handling function corresponding to the relevant RAN node function and/or the event detected by the RIC agent 211, and perform business logic and/or other programming based on the RAN node function and/or detected event, etc. In operation S750, the user application 218 may transmit a control message to the system service application 217 in response to and/or based on the handling function. In operation S760, the system service application 217 may receive resource availability information associated with the relevant RAN node function from the resource management common service application 216B, but the example embodiments are not limited thereto. For example, the system service application 217 may periodically and/or continuously receive resource availability information for all RAN node functions the system service application 217 may be registered for and/or subscribed to, etc. Additionally, the while the resource management common service application 216B is illustrated as being separate from the gateway common service application 216A in FIG. 7, the example embodiments are not limited thereto, and for example, the functionality of the resource management common service and the gateway common service application may be combined into a single application.

In operation S770, the system service application 217 may perform resource conflict mitigation in the event that multiple user applications 218 are attempting to access the same RAN node function at the same time based on at least one desired resource conflict mitigation policy and/or setting of the RAN node 100 and/or RT RIC 210. For example, the RT RIC 210 may assign different priority levels to each of the user applications 218 and perform resource conflict mitigation based on the assigned priority levels of the user applications 218. As another example, the system service application 217 may implement a round robin resource conflict mitigation algorithm, a first come first serve resource conflict mitigation algorithm, a proportional fair scheduling algorithm, a max throughput scheduling algorithm, etc., but the example embodiments are not limited thereto. In operation S780, the system service application 217 may transmit an updated control message to the RIC agent based on the results of the conflict mitigation wherein the control parameters which are in conflict have been removed, modified, adjusted, etc.

According to some example embodiments, the RT application platform 212 supports dynamic deployment and/or updating of user applications using a dynamic update procedure.

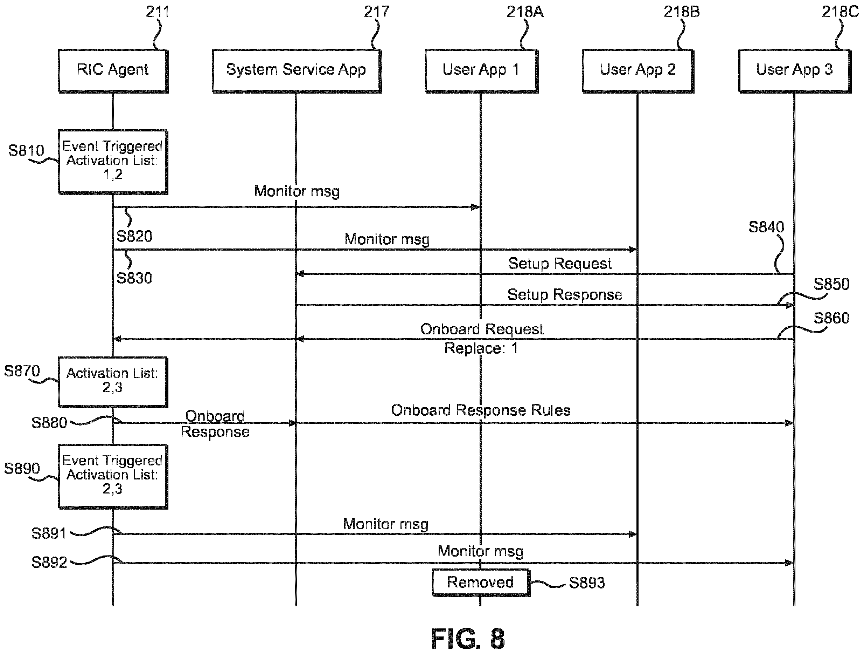

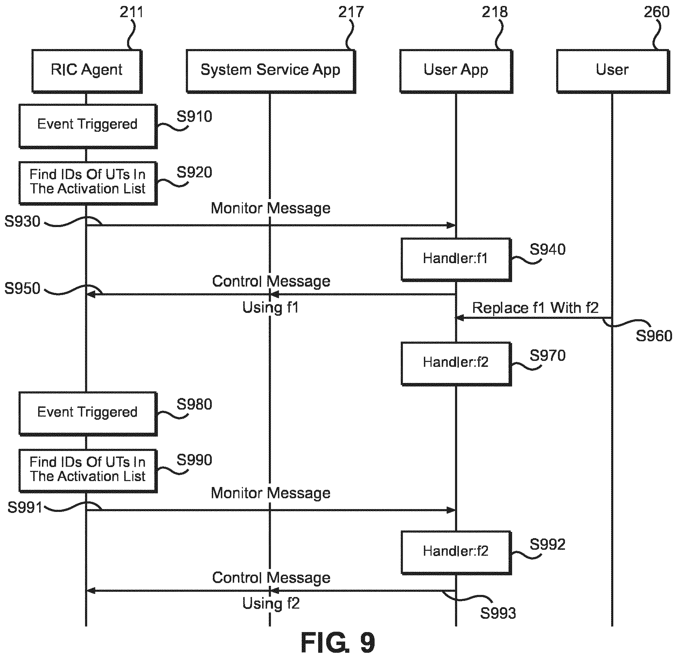

FIG. 8 is an example transmission diagram illustrating a first method of dynamically updating at least one RT user application according to some example embodiments, and FIG. 9 is an example transmission diagram illustrating a second method of dynamically updating at least one RT user application according to some example embodiments.

Referring now to FIG. 8, a first user application 218A and a second user application 218B may be connected to and/or subscribed to an event being monitored by the RIC agent 211. In operation S810, the RIC agent 211 may detect the triggering and/or generation of an event being monitored and may identify the first user application 218A and the second user application 218B on the activation list associated with the event. In operation S820 and S830, the RIC agent 211 may transmit monitor messages to the first user application 218A and the second user application 218B, respectively. In operation S840, a third user application 218C, which may be an updated version of the first user application 218A and/or a replacement for the first user application 218A, may transmit a setup request to the system service application 217 and in operation S850, the third user application 218C may receive a setup response from the system service application 217 as part of the onboarding procedure as discussed in greater detail in connection with FIG. 6. In operation S860, the third user application 218C may transmit a replacement request (e.g., a replacement onboarding request, etc.) to the system service application 217 indicating that the third user application 218C is to replace the first user application 218A. The system service application 217 may evaluate the replacement request, e.g., perform operations S620 to S650 of FIG. 6, and if the replacement request is valid, then forward the replacement request to the RIC agent 211, but the example embodiments are not limited thereto. In operation S870, the RIC agent 211 may update the activation list based on the replacement request from the third user application 218C, and in operation S880, the RIC agent 211 may send a response message to the system service application 217. The system service application 217 may forward the onboarding response rules to the third user application 218C, similar to operation S680 of FIG. 6. In operation S890, the RIC agent 211 may detect another event triggered and/or generated, and in operations S891 and S892, the RIC agent 211 may transmit monitor messages to the second user application 218B and the third user application 218C. In operation S893, the first user application 218A may be safely removed by the RT RIC 210, e.g., by a lifecycle management common services application (not shown) without interrupting the operation of the RAN node 100, but the example embodiments are not limited thereto.

According to at least one other example embodiment, a second method of dynamically updating a user application is shown in FIG. 9. In operation S910, the RIC agent 211 may detect a triggered and/or generated event. In operation S920, the RIC agent 211 may determine and/or identify the identifiers of user applications included in the activation list associated with the triggered event. In operation S930, the RIC agent may transmit a monitor message to the user application 218. In operation S940, the user application 218 may execute a handler function f1 in response to the monitor message, and in operation S950, the user application 218 may transmit a control message using and/or based on the handler f1 to the system service application 217, which may forward the control message to the RIC agent 211. In operation S960, a user 160 (e.g., non-native RAN node software developer, etc.) may compile and/or load a new handler function f2 to replace the handler function f1 in the user application 218, e.g., by compiling the new handler function f2 in a different dynamic library (e.g., a different .so file in Linux, etc.). In operation S980, the RIC agent 211 may detect another triggered event, and in operation S990, may identify the identifiers of the user application associated with the triggered event in the activation list. In operation S991, the user application 218 may use the second handler f2 in response to the monitor message, instead of the first handler f1, and in operation S993, the user application 218 may transmit a control message to the system service application 217 using and/or based on the second handler f2, and the system service application 217 may forward the control message to the RIC agent 211, etc.

In contrast to the first dynamic update method of FIG. 8, the second dynamic update method of FIG. 9 does not require the installation and/or onboarding of a new user application to replace an existing user application, and instead dynamically updates the programming of the existing user application.

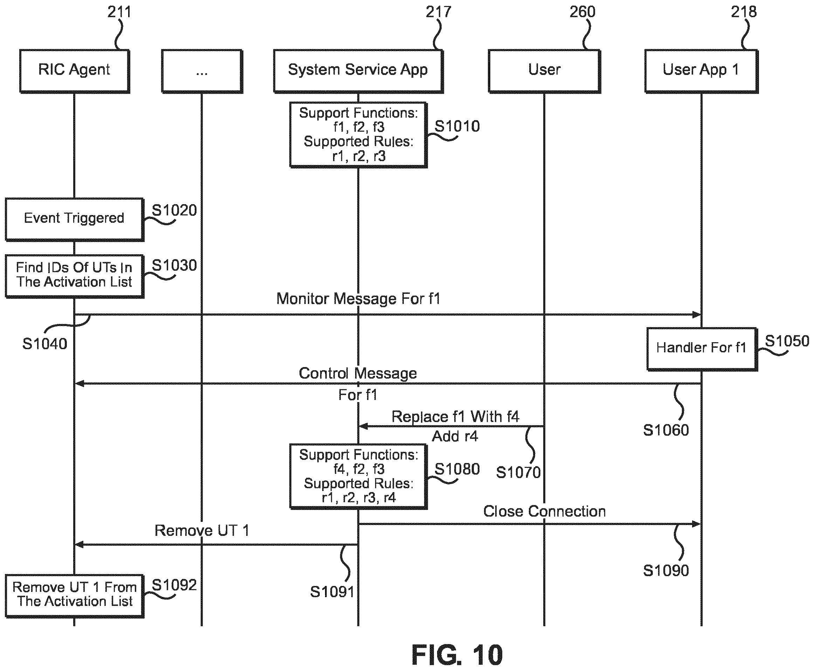

FIG. 10 is an example transmission diagram illustrating a method of dynamically updating at least one system service application according to some example embodiments.

In operation S1010, the system service application 217 may support, e.g., functions f1, f2, f3, and may support rules r1, r2, and r3, but is not limited thereto. In operation S1020, the RIC agent 211 may detect a triggered event, and in operation S1030, the RIC agent 211 may identify the user applications subscribed to the triggered event based on an activation list associated with the triggered event. In operation S1040, the RIC agent 211 may transmit a monitor message for the function f1 to first user application 218 based on the activation list associated with the triggered event. In operation S1050, the first user application 218 may process the monitor message using the handler for f1, and in operation S1060, the user application S118 may transmit a control message using the handler for f1 to the RIC agent 211. In operation S1070, a user 160 may transmit instructions to the system service application 217 to replace the function f1 with a new function f4 (e.g., replacing the first user application 218 with a fourth user application (not shown)) and to add a new rule r4. In operation S1080, the system service application 217 may update its supported functions to f4, f2, and f3 (and removing function f1) and update its supported rules to f1, f2, f3, and f4, but the example embodiments are not limited thereto. In operation S1090, the system service application 217 may transmit a close connection message to the first user application 218 due to the change in the supported functions. In operation S1091, the system service application 217 may transmit a message to the RIC agent to remove the first user application 218, and in operation S1092, the RIC agent 211 may remove the first user application 218 from its activation list for the relevant event.

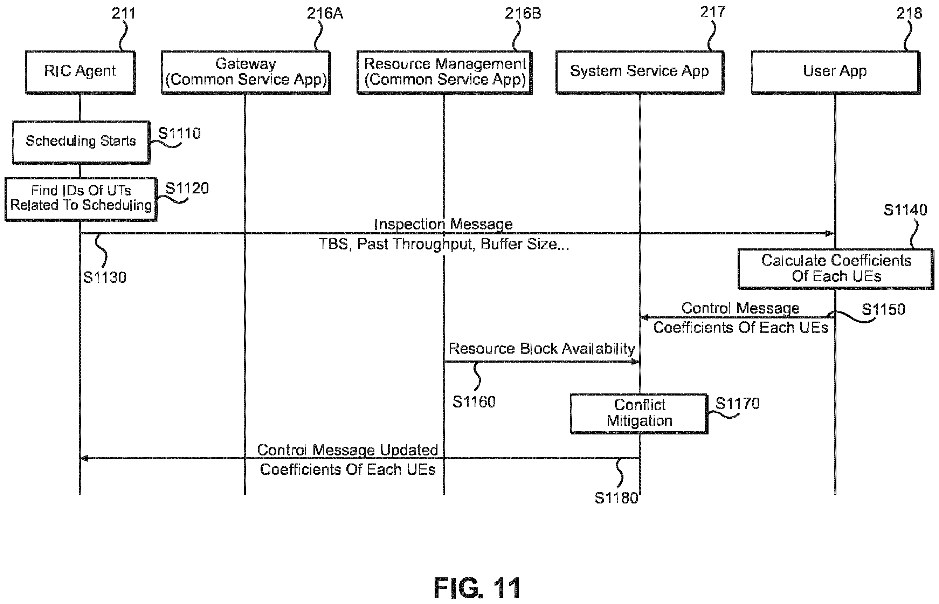

FIG. 11 is an example transmission diagram illustrating a method of performing resource allocation according to some example embodiments. In contrast to conventional resource allocation (e.g., user scheduling, UE scheduling, etc.) which would be traditionally performed in the MAC layer of the RAN node, the resource allocation of the at least one example embodiment of FIG. 11 is performed using a combination of system services and user applications of the RT RIC 210, thereby allowing third parties (e.g., parties besides the RAN node manufacturer) to develop non-native RAN node applications for performing services related to core components of the RAN node and/or for the use of non-proprietary software to perform services related to the core components of the RAN node, etc.

In operation S1110, the MAC layer (e.g., a component of the 3GPP protocol stack 224) may initiate a round of scheduling by the RIC agent 111 (e.g., using a round robin scheduling algorithm, a proportional fair scheduling algorithm, a max throughput scheduling algorithm, etc.), and in operation S1120, the RIC agent 211 may identify the identifiers of user applications related to and/or responsible for scheduling based on the activation list compiled by the RIC agent 211 during the onboarding process for the one or more user applications, such as user application 118. In operation S1130, the RIC agent 211 may transmit an inspection message to a scheduling user applications 218. The inspection message may include information related to user equipment (UE) devices as obtained from the MAC layer (or RAN node 100), such as modulation and coding scheme, block error rate, past throughput, buffer status reports, buffer size, etc., but is not limited thereto. In operation S1140, the scheduling user applications 218 may calculate the coefficients of each UE device using user-defined functions and the information included in the inspection message. In operation S1150, the scheduling user applications 218 may transmit a control message including the calculated coefficients of each of the UE devices to the system service application 217. In operation S1160, similar to operation S760 of FIG. 7, the system service application 217 may receive resource availability information associated with the relevant RAN node function from the resource management common service application 216B on request, periodically, and/or continuously. In operation S1170, similar to operation S770 of FIG. 7, the system service application 217 may perform conflict mitigation in the event that multiple scheduling user applications 218 request the same resource at the same time. In operation S1180, the system service application 217 may transmit an updated control message to the RIC agent 211 including updated coefficients of each UE device, so that the RIC agent 211 may forward the updated coefficients to the core components 220 of the RAN node 100 so that the RAN node 100 may schedule the UE devices.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

It will be understood that, although the terms first, second, and so on may be used herein to describe various elements, these elements should not be limited by these terms. These terms are only used to distinguish one element from another. For example, a first element could be termed a second element, and, similarly, a second element could be termed a first element, without departing from the scope of the example embodiments. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent").

The terminology used herein is for the purpose of describing particular embodiments only and is not intended to be limiting of the example embodiments. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures illustrated in succession may in fact be executed substantially concurrently or may sometimes be executed in the reverse order, depending upon the functionality/acts involved.

Specific details are provided in the following description to provide a thorough understanding of the example embodiments. However, it will be understood by one of ordinary skill in the art that example embodiments may be practiced without these specific details. For example, systems may be illustrated in block diagrams in order not to obscure the example embodiments in unnecessary detail. In other instances, well-known processes, structures and techniques may be illustrated without unnecessary detail in order to avoid obscuring example embodiments.

Also, it is noted that example embodiments may be described as a process depicted as a flowchart, a flow diagram, a data flow diagram, a structure diagram, or a block diagram. Although a flowchart may describe the operations as a sequential process, many of the operations may be performed in parallel, concurrently or simultaneously. In addition, the order of the operations may be re-arranged. A process may be terminated when its operations are completed, but may also have additional steps not included in the figure. A process may correspond to a method, a function, a procedure, a subroutine, and/or a subprogram. When a process corresponds to a function, its termination may correspond to a return of the function to the calling function or the main function.

Moreover, as disclosed herein, the term "memory" may represent one or more devices for storing data, including random access memory (RAM), magnetic RAM, core memory, and/or other machine readable mediums for storing information. The term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information. The term "computer-readable medium" may include, but is not limited to, portable or fixed storage devices, optical storage devices, wireless channels, and various other mediums capable of storing, containing or carrying instruction(s) and/or data.

Furthermore, example embodiments may be implemented by hardware circuitry and/or software, firmware, middleware, microcode, and/or hardware description languages, in combination with hardware (e.g., software executed by hardware). When implemented in software, firmware, middleware or microcode, the program code or code segments to perform the desired tasks may be stored in a machine or computer readable medium such as a non-transitory computer storage medium, and loaded onto one or more processors to perform the desired tasks.

A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, and/or data, may be passed, forwarded, or transmitted via any suitable means including memory sharing, message passing, token passing, and/or network transmission.

As used in this application, the term "circuitry" and/or "hardware circuitry" may refer to one or more or all of the following: (a) hardware-only circuit implementation (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s)), software, and memory(ies) that work together to cause an apparatus, such as a mobile phone or server, to perform various functions); and (c) hardware circuit(s) and/or processor(s), such as microprocessor(s) or a portion of a microprocessor(s), that requires software (e.g., firmware) for operation, but the software may not be present when it is not needed for operation. For example, the circuitry more specifically may include, but is not limited to, a central processing unit (CPU), an arithmetic logic unit (ALU), a digital signal processor, a microcomputer, a field programmable gate array (FPGA), a System-on-Chip (SoC), a programmable logic unit, a microprocessor, or an application-specific integrated circuit (ASIC).

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

## Claims

1. A radio access network (RAN) node (100) comprising:
means for causing a real-time (RT) application platform (212) to execute at least one RT user application (218), the at least one RT user application (218) being a non-native RAN node application; and
means for causing a RT agent application (211) to,
monitor events generated by at least one native RAN node function, and
transmit a mailbox message to the at least one RT user application (218) in response to the generated event.

2. The RAN node (100) of claim 1, wherein the at least one native RAN node function is at least one of:
an Open-RAN RAN application programming interface (API) function;
an operation, administrative, and management (OAM) API function;
a native base station API function;
a 3rd Generation Partnership Project (3GPP) protocol API function; or
any combinations thereof.

3. The RAN node (100) of any one of claims 1 to 2, wherein a control loop execution time period of the at least one RT user application (218) is less than 10 ms.

4. The RAN node (100) of any one of claims 1 to 3, wherein the RT application platform (212) is further caused to execute at least one of:
at least one interface services application, at least one common services application, at least one system services application, or any combinations thereof.

5. The RAN node (100) of claim 4, wherein the interface services application is configured to:
communicate with at least one non-RT application or at least one near-RT application over at least one external communication interface.

6. The RAN node (100) of claim 5, wherein the at least one external communication interface includes at least one of:
at least one first non-3GPP interface configured to communicate with the at least one non-RT application;
at least one second non-3GPP interface configured to communicate with the at least one near-RT application; or
a combination thereof.

7. The RAN node (100) of any one of claims 4 to 6, wherein the at least one common services application is configured to:
receive a function list mailbox message from the RT agent application (211) indicating a plurality of native RAN node functions supported by the RAN node (100), the plurality of native RAN node functions including the at least one native RAN node function;
receive a system service setup request from the system service application, the system service setup request including at least one requested native RAN node function of the plurality of native RAN node functions;
determine whether to grant access to the system service application to the at least one requested native RAN node function based on permissions of the system service application; and
transmit a response to the system service setup request based on results of the determination.

8. The RAN node (100) of any one of claims 4 to 7, wherein the at least one system service application is configured to:
manage access of the at least one RT user application (218) to the at least one requested native RAN node function.

9. The RAN node (100) of any one of claims 4 to 8, wherein the at least one system service application is configured to manage the access of the at least one RT user application (218) by:
receiving an onboarding request from the at least one RT user application (218), the onboarding request including a requesting access to the at least one native RAN node function;
determining whether to grant access to the at least one RT user application (218) to the requested at least one native RAN node function based on permissions of the at least one RT user application (218) and a status of the at least one native RAN node function; and
transmitting the onboarding request to the RT agent application (211) based on results of the determination.

10. The RAN node (100) of any one of claims 1 to 9, wherein the RT agent application (211) is further configured to:
receive the onboarding request from the at least one system service application;
determine a status of the at least one native RAN node function;
add the at least one RT user application (218) to an activation list associated with the at least one native RAN node function based on the determined status of the at least one native RAN node function; and
transmit a response to the onboarding request to the at least one system service application based on the addition of the at least one RT user application (218) to the activation list associated with the at least one native RAN node function, the response including a rules list associated with the at least one native RAN node function and the at least one RT user application (218).

11. The RAN node (100) of any one of claims 4 to 10, wherein the at least one system service application is configured to manage the access of the at least one RT user application (218) by:
receiving a replacement onboarding request from a second RT user application different from the at least one RT user application (218), the replacement onboarding request indicating that the second RT user application is to replace the at least one RT user application (218);
determining whether to grant access to the second RT user application to the requested at least one native RAN node function based on permissions of the second RT user application and a status of the at least one native RAN node function; and
transmitting the replacement onboarding request to the RT agent application (211) based on results of the determination.

12. The RAN node (100) of any one of claims 1 to 11, wherein
the RT application platform (212) includes a lifecycle management application;
the RT agent application (211) is further configured to,
receive the replacement onboarding request from the at least one system service application,
determine a status of the at least one native RAN node function,
add the second RT user application to an activation list associated with the at least one native RAN node function based on the determined status of the at least one native RAN node function,
remove the at least one RT user application (218) from the activation list associated with the at least one native RAN node function, and
transmit a response to the replacement onboarding request to the at least one system service application based on the addition of the second RT user application to the activation list associated with the at least one native RAN node function, the response including a rules list associated with the at least one native RAN node function and the second RT user application; and
the lifecycle management application is configured to remove the at least one RT user application (218) based on the response to the replacement onboarding request.

13. The RAN node (100) of any one of claims 1 to 12, wherein
the at least one RT user application (218) is a plurality of RT user applications; and
the RT agent application (211) is further configured to monitor the events generated by the at least one native RAN node function by,
identifying RT user applications included in an activation list associated with the at least one native RAN node function, the identified RT user applications being included in the plurality of RT user applications, and
transmitting the mailbox message to the identified RT user applications in response to the generated event.

14. A method of operating a radio access network (RAN) node (100) comprising:
monitoring, using a real-time (RT) agent application (211), events generated by at least one native RAN node function; and
transmitting, using the RT agent application (211), a mailbox message to at least one RT user application (218) in response to the generated event, the at least one RT user application (218) executed on a RT application platform (212), the at least one RT user application (218) being a non-native RAN node application.

15. A non-transitory computer readable medium (130) storing computer program instructions which, when executed by an apparatus (100), cause the apparatus (100) at least to:
monitor, using a real-time (RT) agent application (211), events generated by at least one native RAN node function; and
transmit, using the RT agent application, a mailbox message to at least one RT user application (218) in response to the generated event, the at least one RT user application (218) executed on a RT application platform (212), the at least one RT user application (218) being a non-native RAN node application.
